# EUROPEAN PATENT SPECIFICATION

(11) **EP 4 450 172 B1**
(45) Date of publication and mention of the grant of the patent: **28.01.2026**
(21) Application number: 24155395.7
(22) Date of filing: 01.02.2024
(51) Int. Cl.: B05C 5/02, B05C 9/06, B05C 9/12, B05C 11/10

(54) **APPARATUS AND METHOD FOR INSPECTING AND REPAIRING DISPENSED VISCOUS FLUID**
VORRICHTUNG UND VERFAHREN ZUR INSPEKTION UND REPARATUR VON ABGEGEBENER VISKOSER FLÜSSIGKEIT
APPAREIL ET PROCÉDÉ D'INSPECTION ET DE RÉPARATION DE FLUIDE VISQUEUX DISTRIBUÉ

(30) Priority: 18.04.2023 KR 20230050850
(43) Date of publication of application: 23.10.2024
(73) Proprietor: SK On Co., Ltd., Seoul 03161 (KR)
(72) Inventor: HONG, Min Jeong, 34124 Daejeon (KR); KIM, Jae Hun, 34124 Daejeon (KR); OH, Yoon Sung, 34124 Daejeon (KR); LEE, Seul Gi, 34124 Daejeon (KR); LEE, Seung Won, 34124 Daejeon (KR)
(74) Representative: Prüfer & Partner mbB Patentanwälte · Rechtsanwälte

(56) References cited:
- WO-A1-2009/070568
- WO-A1-2021/168174
- WO-A1-2022/103384
- US-A1- 2007 000 442

## Description

### TECHNICAL FIELD

The disclosed technology relates to an apparatus and a method for inspecting and repairing a dispensed viscous fluid.

### BACKGROUND

Thermal adhesive may be used in the process of manufacturing a battery module. Thermal adhesive, which is a viscous fluid, may be applied to the battery module by a dispenser. The shape of thermal adhesive applied to the battery module may affect the cooling performance of the battery module. When impact or vibration is applied to the battery module, parts to which the thermal adhesive is poorly applied may be damaged. Accordingly, it is necessary to check whether the thermal adhesive satisfies a predetermined application quality.

Documents US 2007/0000442 A1 and WO 20222/103384 A1 respectively disclose an apparatus for inspecting and repairing a dispensed fluid, the apparatus comprising a dispenser module dispensing a fluid on a workpiece; a vision module generating images by photographing the fluid dispensed on the workpiece; a robot module moving the dispenser module and the vision module through predetermined paths, respectively; and a control module determining whether a defective part exists in the dispensed fluid by analyzing the images and controlling the dispenser module and the robot module to dispense a viscous fluid to a defective part when the defective part exists.

In the document US 2007/0000442 A1, the defective part is corrected by applying a pasty adhesive along with spray air.

### SUMMARY

The disclosed technology provides an apparatus according to claim 1 and a method according to claim 8 for inspecting and repairing a dispensed viscous fluid.

In an aspect of the disclosed technology, there is provided an apparatus for inspecting and repairing a dispensed viscous fluid according to the disclosed technology, the apparatus including: a dispenser module dispensing a viscous fluid on a workpiece; a vision module generating original images by photographing the viscous fluid dispensed on the workpiece; a robot module moving the dispenser module and the vision module through predetermined paths, respectively; and a control module determining whether a defective part exists in the dispensed viscous fluid by analyzing the original images and controlling the dispenser module and the robot module to dispense a viscous fluid to a defective part when the defective part exists.

On the basis of an embodiment, the control module may generate sampling images by extracting some of the original images generated by being photographed in real time by the vision module by considering a moving distance of the robot module and a shooting interval of the vision module, may generate stitching images by connecting the sampling images to each other on a basis of a shape of the viscous fluid shown in each of the sampling images, may generate a panoramic image by connecting the stitching images to each other, and may determine in real time whether a defect exists in the viscous fluid shown in the panoramic image.

The apparatus for inspecting and repairing a dispensed viscous fluid further includes a correction module which is moved by the robot module and forms a shape of the viscous fluid by discharging air to the viscous fluid dispensed to the defective part for repairing the defective part on a basis of control of the control module.

On the basis of an embodiment, the correction module may include: one nozzle or a plurality of nozzles discharging air toward the viscous fluid; a body fixing the nozzle to be directed toward the viscous fluid; and an air supplier supplying air to the nozzle through an air line, wherein the control module may control whether the air supplier outputs air and air output pressure of the air supplier so that air discharged by the nozzle changes a shape of the viscous fluid, and may control the robot module to arrange the body at a desired position.

On the basis of an embodiment, the body may have an arcuate cross section in a width direction of the viscous fluid and may be formed into a long straight shape in a longitudinal direction of the viscous fluid so that the plurality of nozzles faces the viscous fluid.

On the basis of an embodiment, the body may include: a plurality of sub-bodies, each of which has an arcuate cross section in a width direction of the viscous fluid so that the plurality of nozzles faces the viscous fluid; and joints connecting the plurality of sub-bodies to each other so that the plurality of sub-bodies is wholly transformed into a shape bent in the longitudinal direction of the viscous fluid, wherein the control module may control the joints to correspond to a straight or curved portion of a reference pattern of the viscous fluid so that air discharged by the nozzle forms the viscous fluid into a straight or curved line corresponding to the reference pattern.

On the basis of an embodiment, the body may have an arcuate cross section in a width direction of the viscous fluid and may be formed into a long and curved shape in the longitudinal direction of the viscous fluid so that the plurality of nozzles faces the viscous fluid.

On the basis of an embodiment, the plurality of nozzles may be divided into two or more nozzle groups which discharge air toward the viscous fluid from various directions, the air supplier may independently supply air to the air line connected to each of the two or more nozzle groups, and the control module may independently control whether to output air supplied to the two or more nozzle groups by the air supplier and output pressure of the air according to a type of a defect of the viscous fluid.

There is provided a method for inspecting and repairing a dispensed viscous fluid according to the disclosed technology, the method including: dispensing a viscous fluid on a workpiece by a dispenser module moved by a robot module; generating original images by a vision module photographing the dispensed viscous fluid on the workpiece; inspecting the dispensed viscous fluid to see whether a defective part exists in the dispensed viscous fluid by a control module analyzing the original images; and repairing the viscous fluid by the control module controlling the dispenser module and the robot module to dispense a viscous fluid to a defective part when the defective part exists in the dispensed viscous fluid.

On the basis of an embodiment, the inspecting may include: generating sampling images by extracting some of the original images generated by the vision module by considering the moving distance of the robot module and the shooting interval of the vision module; generating stitching images by connecting the sampling images to each other on a basis of a shape of the viscous fluid shown in the sampling images; generating a panoramic image by connecting the stitching images to each other; and determining whether a defect exists in the viscous fluid by comparing a shape of the viscous fluid shown in the panoramic image with a reference pattern, wherein the inspecting may be performed in real time.

The method for inspecting and repairing a dispensed viscous fluid further includes correcting the viscous fluid by forming a shape of the viscous fluid by discharging air to the viscous fluid dispensed to the defective part by using a correction module for repairing the defective part.

On the basis of an embodiment, the correction module include: the one nozzle or the plurality of nozzles discharging air toward the viscous fluid; the body fixing the nozzle to be directed toward the viscous fluid; and the air supplier supplying air to the nozzle through the air line, wherein the correcting of the viscous fluid may include: locating the correction module at the defective part; and controlling whether the air supplier outputs air and air output pressure of the air supplier so that air discharged by the nozzle changes the shape of the viscous fluid.

On the basis of an embodiment, the body may include: the plurality of sub-bodies, each of which has an arcuate cross section in a width direction of the viscous fluid so that the plurality of nozzles faces the viscous fluid; and the joints connecting the plurality of sub-bodies to each other so that the plurality of sub-bodies is wholly transformed into a shape bent in the longitudinal direction of the viscous fluid, wherein the correcting of the viscous fluid may include: controlling the joints to correspond to a straight or curved portion of the reference pattern of the viscous fluid so that air discharged by the nozzle forms the viscous fluid into a straight or curved line corresponding to the reference pattern; performing the locating of the correction module at the defective part; and performing the controlling of whether the air supplier outputs air and air output pressure of the air
supplier so that air discharged by the nozzle changes the shape of the viscous fluid.

On the basis of an embodiment, the plurality of nozzles may be divided into two or more nozzle groups which discharge air toward the viscous fluid from various directions, the air supplier may independently supply air to the air line connected to each of the two or more nozzle groups, and in the controlling of whether the air supplier outputs air and air output pressure of the air supplier, the control module may independently control whether to output air supplied to the two or more nozzle groups by the air supplier and output pressure of the air according to a type of a defect of the viscous fluid.

The features and advantages of the disclosed technology will become more apparent through the following detailed description based on the accompanying drawings.

Prior to the description, terms or words used in this specification and claims should not be construed in their usual, dictionary meaning, and on the basis of the principle that the inventor may appropriately define the concept of the terms in order to explain his or her invention in the best way, the terms should be interpreted as having meaning and concept consistent with the technical idea of the disclosed technology.

According to the disclosed technology, the quality of a dispensed viscous fluid can be inspected in real time, a disconnected part of a viscous fluid can be repaired, and the shape of the viscous fluid in the repaired part can be formed, thereby improving dispensing quality.

### BRIEF DESCRIPTION OF THE DRAWING

FIG. 1 is a view showing a battery cell on the basis of an embodiment.
FIG. 2 is a cross-sectional view taken along line A-A' of FIG. 1.
FIG. 3 is a view showing a battery module manufactured by coupling the battery cell and a housing to each other by a dispensed viscous fluid on the basis of an embodiment.
FIG. 4 is a view snowing the combination of the dispensed viscous fluid, the battery cell, a lower cover on the basis of an embodiment.
FIG. 5 is a view showing a state in which an apparatus for inspecting and repairing a dispensed viscous fluid on the basis of an embodiment dispenses a viscous fluid.
FIG. 6 is a block diagram showing the apparatus for inspecting and repairing a dispensed viscous fluid on the basis of an embodiment.
FIG. 7 is a flowchart showing a method for inspecting and repairing a dispensed viscous fluid on the basis of an embodiment.
FIG. 8 is a view showing a dispensed viscous fluid and an imaging area on a workpiece on the basis of an embodiment.
FIG. 9 is a view showing original images, sampling images, stitching images, and a panoramic image on the basis of an embodiment.
FIG. 10 is a view showing a process of repairing and correcting a defective part on the basis of an embodiment.
FIG. 11 is a view showing a correction module based on an embodiment.
FIG. 12 is a view showing a process in which the correction module based on the embodiment forms the viscous fluid.
FIG. 13 is a view showing a correction module with a curved body on the basis of an embodiment.
FIG. 14 is a view showing a correction module with a transformable body on the basis of an embodiment.
FIG. 15 is a view showing the process of correcting a viscous fluid according to the type of a defect by using a correction module with nozzle groups on the basis of an embodiment.

### DETAILED DESCRIPTION

The objectives, advantages, and features of the disclosed technology will become more apparent from the following detailed description and preferred embodiments in conjunction with the accompanying drawings, but the disclosed technology is not necessarily limited thereto. Additionally, when explaining the disclosed technology, if it is determined that a detailed description of the related known technology may unnecessarily obscure the gist of the disclosed technology, detailed description thereof is omitted.

In assigning reference numerals to components in the drawings, it should be noted that identical components are assigned the same reference numerals as much as possible even if they are shown in different drawings, and similar components are assigned similar reference numerals.

Terms used to describe an embodiment of the disclosed technology are not intended to limit the disclosed technology. It should be noted that singular expressions include plural expressions unless the context clearly dictates otherwise.

The drawings may be schematic or exaggerated to illustrate embodiments.

In this document, expressions such as "have", "may have", "includes", or "may include" refer to the existence of the corresponding features (e.g., a numerical value, function, operation, or component such as a part) and does not rule out the existence of additional features.

Terms such as "one", "other", "another", "first", and "second", etc. are used to separate one component from another. The components are used for distinction, and the components are not limited by the above terms.

It should be understood that directional terms such as up, down, left, right, x-axis, y-axis, and z-axis, etc. are used for descriptive purposes only and may be expressed differently depending on the position of an observer or the position of an object.

Hereinafter, an embodiment of the disclosed technology will be described in detail with reference to the accompanying drawings.

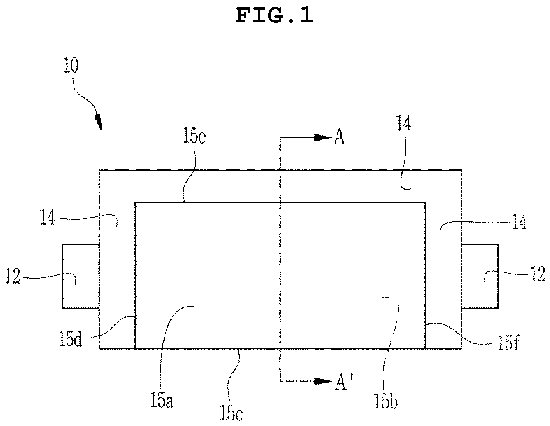

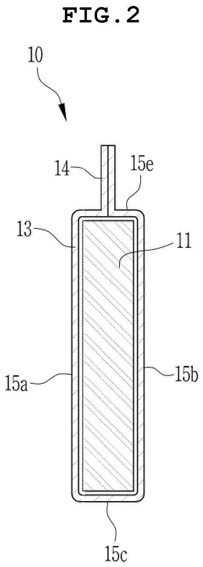

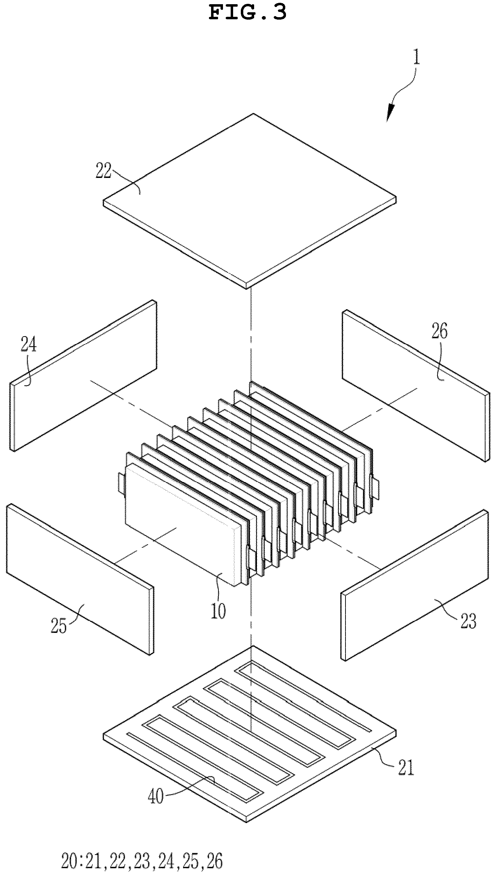

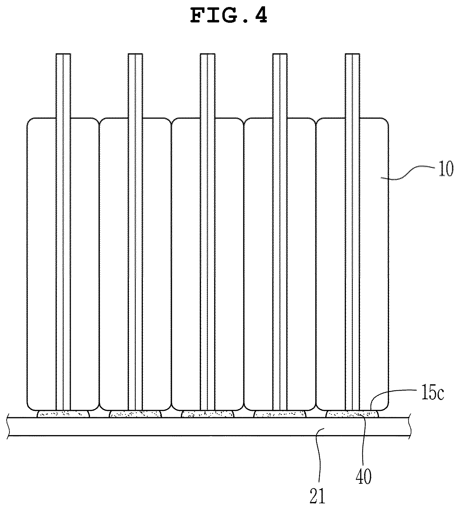

FIG. 1 is a view showing a battery cell on the basis of an embodiment. FIG. 2 is a cross-sectional view taken along line A-A' of FIG. 1. FIG. 3 is a view showing a battery module 1 manufactured by coupling the battery cell 10 and a housing 20 to each other by a dispensed viscous fluid 40 on the basis of an embodiment. FIG. 4 is a view snowing the combination of the dispensed viscous fluid 40, the battery cell 10, and a lower cover 21 on the basis of an embodiment. FIG. 4 shows the battery module 1, other components of which are omitted.

The battery cell 10 may be formed so that an exterior material 13 surrounds an electrode assembly 11from which an electrode tab 12 is pulled out. The electrode assembly 11 may include a positive electrode material, a negative electrode material, and a separator, and the electrode tab 12 may be connected to each of the positive electrode material and the negative electrode material. The exterior material 13 may be a film, an aluminum layer of which has lower and upper parts coated with an electrical insulating material.

The battery cell 10 may be formed in a pouch type by having one exterior material 13 formed therein to store the electrode assembly 11 therein so that one surface of the battery cell does not have a sealing part 14 and each of three surfaces thereof have the sealing part 14. The sealing part 14 is a part on which the facing parts of the exterior material 13 is joined by a thermal, physical, or chemical method. For example, in the battery cell 10 of FIGS. 1 and 2, a first surface 15a and a second surface 15b become receiving parts due to the forming of the exterior material 13, a third surface 15c, which is a part on which the exterior material 13 is folded, has no sealing part 14, and each of a fourth surface 15d, a fifth surface 15e, a sixth surface 15f may have the sealing part 14. The electrode tab 12 may be pulled out through the fourth surface 15d and the sixth surface 15f.

The battery module 1 may be manufactured to have structure in which a plurality of battery cells 10 is stored in the housing 20. The housing 20 and the battery cell 10 may be joined by the viscous fluid 40 such as adhesive. The viscous fluid 40 may include various components and is a viscous fluid. The viscous fluid 40 may include thermal adhesive. The viscous fluid 40 may include a two-component adhesive in which a resin with a cooling function and a hardener for physical fixation are mixed with each other. The viscous fluid 40 hardens between the battery cell 10 and the housing 20 to fix the battery cell 10 and the housing 20 to each other.

The housing 20 may include an upper cover 22, the lower cover 21, a first side cover 23, a second side cover 24, a front cover 25, and a rear cover 26. The covers may be connected to each other or formed integrally to constitute the housing 20. FIG. 3 shows the battery module 1 of structure in which a plurality of battery cells 10 is stored in a storage space defined by combining the lower cover 21, the first side cover 23, the second side cover 24, the front cover 25, and the rear cover 26. The battery cell 10 and the lower cover 21 may be fixed to each other by contacting the battery cell 10 on the lower cover 21 on which the viscous fluid 40 is dispensed.

In addition to the structure of the battery cell 10 shown in FIGS. 1 and 2, the apparatus 2 for inspecting and repairing a dispensed viscous fluid on the basis of the embodiment may be used even when manufacturing a battery module including a battery cell having structure in which two electrode tabs 12 are pulled out through one surface, a battery cell having structure in which sealing parts 14 are formed on four surfaces by using two exterior materials 13, or a battery cell having structure in which a plurality of electrode tabs 12 having the same polarities is arranged on one surface.

As shown in FIG. 4, the third surface 15c of the battery cell 10 may be in contact with the dispensed viscous fluid 40 on the lower cover 21. In a process in which the viscous fluid 40 is dispensed, a defect in which the viscous fluid 40 is not dispensed in some areas or dispensed in an insufficient amount may occur. Such a defect may cause separation of the battery cell 10 from the lower cover 21, and may form a gap between the battery cell 10 and the lower cover 21, making it difficult for heat of the battery cell 10 to be discharged to the lower cover 21.

The viscous fluid 40, such as thermal adhesive, begins to harden from a moment at which the viscous fluid 40 is dispensed, so the dispensing and inspection of the viscous fluid 40 are required to be performed simultaneously. The apparatus 2 for inspecting and repairing a dispensed viscous fluid on the basis of an embodiment may inspect the viscous fluid 40 immediately after dispensing the viscous fluid 40, additionally dispense the viscous fluid to a defective part 350 when the defective part 350 is detected, and may repair the defective part 350. Accordingly, the apparatus 2 may repair the defective part 350 before the viscous fluid 40 hardens.

Furthermore, the apparatus 2 for inspecting and repairing a dispensed viscous fluid on the basis of the embodiment may inspect the viscous fluid 40 immediately after dispensing the viscous fluid 40, dispense additionally the viscous fluid 40 to the defective part 350 when the defective part 350 is detected, and may additionally form the shape of the dispensed viscous fluid 40 by using a correction module 200. The viscous fluid 40 begins to harden immediately after dispensed and has high viscosity, so the shape of the viscous fluid 40 according to a reference pattern cannot be formed simply by additionally dispensing the viscous fluid 40 to the defective part 350. Accordingly, on the basis of the embodiment, by using the correction module 200, the shape of the additionally dispensed viscous fluid 40 can be formed according to a reference pattern, thereby improving dispensing quality.

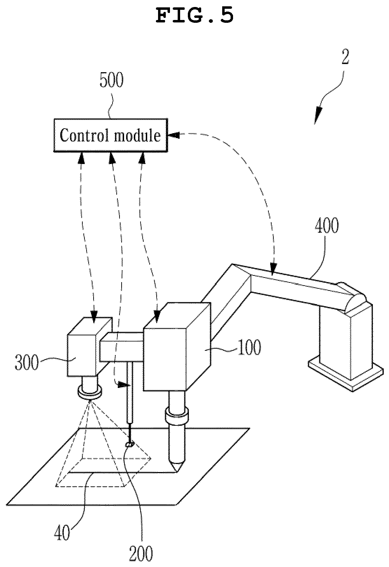

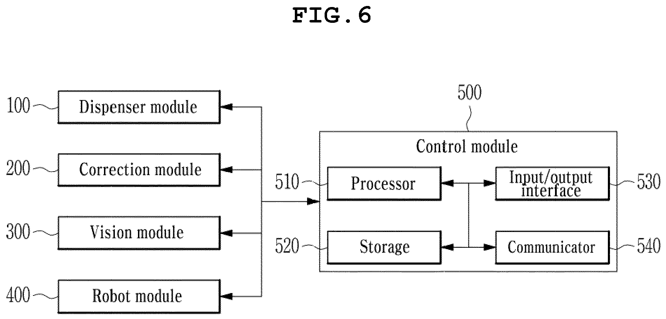

FIG. 5 is a view showing a state in which an apparatus for inspecting and repairing a dispensed viscous fluid 40 on the basis of an embodiment dispenses the viscous fluid 40. In FIG. 5, control signals that a control module 500 applies a dispenser module 100, the correction module 200, a vision module 300, and a robot module 400 are indicated with dotted lines. FIG. 6 is a block diagram showing the apparatus for inspecting and repairing a dispensed viscous fluid 40 on the basis of an embodiment.

The apparatus 2 for inspecting and repairing a dispensed viscous fluid on the basis of an embodiment includes: the dispenser module 100 dispensing the viscous fluid 40 to a workpiece 30; the vision module 300 generating original images 310 by photographing the dispensed viscous fluid 40 on the workpiece 30; the robot module 400 moving the dispenser module 100 and the vision module 300 through predetermined paths, respectively; and the control module 500 determining whether the defective part 350 exists in the dispensed viscous fluid 40 by analyzing the original images 310 and controlling the dispenser module 100 and the robot module 400 so as to dispense the viscous fluid 40 to the defective part 350 when the defective part 350 exists.

The workpiece 30 may be the battery module 1 or a component of the battery pack. The workpiece 30 may be the lower cover of the housing 20 of the battery module 1. The workpiece 30 may be a battery cell or the upper cover.

The dispenser module 100 can dispense the viscous fluid 40 to the workpiece 30. The dispenser module 100 may include a resin tank, a hardener tank, a pump, the nozzle 210, a valve, and a mixer required to dispense the viscous fluid 40. In this specification, a detailed description of the components that the dispenser module 100 that dispenses the viscous fluid 40 may include is omitted. According to the control of the control module 500, the dispenser module 100 may dispense the viscous fluid 40 to the workpiece 30 according to a reference pattern. The dispenser module 100 may additionally dispense the viscous fluid 40 to the defective part 350 according to the control of the control module 500.

On the basis of the control of the control module 500, the robot module 400 may move the dispenser module 100 according to a reference pattern. The robot module 400 may position the nozzle 210 of the dispenser module 100 at a predetermined point with respect to the workpiece 30 and may move the nozzle 210 according to the reference pattern. The robot module 400 may include a robot arm that can operate in six-axis directions. The robot module 400 may include a device that moves the nozzle 210 of the dispenser module 100 along X, Y, and Z axes.

Due to the viscous nature of the viscous fluid 40, the shape of the viscous fluid 40 dispensed on the workpiece 30 may vary depending on the amount and pressure of the fluid dispensed by the dispenser module 100 and the speed and path of the dispenser module 100 moved by the robot module 400. The control module 500 may integrally control the dispenser module 100 and the robot module 400 so that the viscous fluid 40 is dispensed according to a reference pattern.

The vision module 300 may generate the original images 310 by photographing the dispensed viscous fluid 40. The vision module 300 may include one or more cameras. The vision module 300 may generate the original images 310 and provide the original images 310 to the control module 500. The vision module 300 may generate the original images 310 in black and white, an RGB color, or infrared depending on the type of a camera. The vision module 300 may be moved by the robot module 400 so that the vision module 300 moves along the viscous fluid 40 that the dispenser module 100 dispenses. The vision module 300 is physically connected to the dispenser module 100 and may photograph the dispensed viscous fluid 40 according to a path along which the robot module 400 moves the dispenser module 100. The robot module 400 may move the vision module 300 independently of the dispenser module 100.

The control module 500 may analyze the original images 310 received from the vision module 300 to determine whether the defective part 350 exists in the dispensed viscous fluid 40. The defective part 350 is a part that is dispensed differently from the reference pattern. For example, the defective part 350 may include a part in which a pattern is broken due to the dispensed viscous fluid 40 being insufficient in amount or the viscous fluid 40 not being dispensed to a specific part.

The control module 500 may generate sampling images 320 by extracting some of the original images 310 generated by being photographed in real time by the vision module 300 by considering the moving distance of the robot module 400 and the shooting interval of the vision module, may generate stitching images 330 by connecting the sampling images 320 to each other on the basis of the shape of the viscous fluid 40 shown in each of the sampling images 320, may generate a panoramic image 340 by connecting the stitching images 330 to each other, and may determine in real time whether a defect exists in the viscous fluid 40 shown in the panoramic image 340.

The original images 310 are images generated by the vision module 300. Considering a distance by which the robot module 400 moves the vision module 300 and an interval at which the vision module 300 photographs the viscous fluid 40, portions of the plurality of original images 310 may be photographed to overlap.

The sampling images 320 are an extraction of a portion of the original images 310. The control module 500 may generate the sampling images 320 by extracting a portion of the original images 310 so that overlapping portions of the original images 310 and the viscous fluid 40 are included.

The stitching images 330 may be generated by connecting the plurality of sampling images 320 to each other in order. The control module 500 may generate the stitching images 330 by performing stitching for connecting the sampling images 320 to match the shape of the viscous fluid 40 shown in the sampling image 320 of the previous order according to the shapes of the viscous fluid 40 shown at borders between the sampling images 320.

The panoramic image 340 is formed by performing image processing for inspecting the defective part 350 after connecting each of the stitching images 330 to each other so that the stitching image 330 has a predetermined length. The control module 500 may generate a long image in a longitudinal direction LD of the viscous fluid 40 by continuously connecting the stitching images 330. The control module 500 may binarize the image on the basis of color or shade difference between the workpiece 30 and the viscous fluid 40.

The control module 500 may recognize a part of the panoramic image 340 in which the viscous fluid 40 is cut off, or thickness is thinner than a predetermined value and may determine the part as the defective part 350. The control module 500 may control the dispenser module 100 and the robot module 400 to dispense the viscous fluid 40 to the defective part 350 when the defective part 350 exists. The control module 500 may repair the defective part 350 by additionally dispensing the viscous fluid 40 to the defective part 350.

The apparatus 2 for inspecting and repairing a dispensed viscous fluid on the basis of the embodiment further includes the correction module 200 which is moved by the robot module 400 and forms the shape of the viscous fluid 40 by discharging air to the viscous fluid 40 dispensed to the defective part 350 for repairing the defective part 350 on the basis of the control of the control module 500.

The correction module 200 may discharge air to form the viscous fluid 40 into a desired shape. The correction module 200 may be moved by the robot module 400. The correction module 200, the vision module 300, and the dispenser module may be moved together or separately by the robot module 400. Since the viscous fluid 40 is viscous, it is not suitable for the viscous fluid 40 to be formed through physical contact. Accordingly, in the embodiment, the correction module 200, which discharges air, may change the viscous fluid 40 into a desired shape by using force applied to the viscous fluid 40 by the air. The control module 500 may control pressure at which the correction module 200 discharges air to the viscous fluid 40, the amount of air, the air discharge start time, the air discharge end time, and the direction of the nozzle 210 that sprays air. The specific shape and control method of the correction module 200 will be described later.

The control module 500 may include a processor 510 and a storage 520 which is communicatively connected to the processor 510 and stores program codes. The control module 500 may further include an Input/output interface 530 that is communicatively connected to the processor 510 and receives a user input and provides information to the user. The control module 500 may further include a Communicator 540 which is communicatively connected to the processor 510 and connected to a wired or wireless network to transmit and receive data.

The processor 510 may include a CPU, GPU, PLC, or other elements capable of performing various information processing functions. The processor 510 may perform a method for inspecting and repairing a dispensed viscous fluid on the basis of the embodiment by reading and executing program codes stored in the storage 520.

The storage 520 may include memory, a hard disk, a magnetic tape, or various data storage media. The storage 520 may store a program code written to perform the method for inspecting and repairing a dispensed viscous fluid on the basis of the embodiment, the reference pattern, a defect judgment standard, and data required to perform the method for inspecting and repairing a dispensed viscous fluid.

The Input/output interface 530 may include an input device such as a touchpad, a mouse, a keyboard, a button, and a lever to receive user commands, and an output device such as a display, a touch screen, a speaker, a printer, and a light emitter to provide information to a user.

The Communicator 540 may use various communication methods to transmit and receive data by being connected to a wired or wireless network. The Communicator 540 may use WAN, LAN, ethernet, 5G, 6G, LTE, wi-fi, bluetooth, or known communication methods.

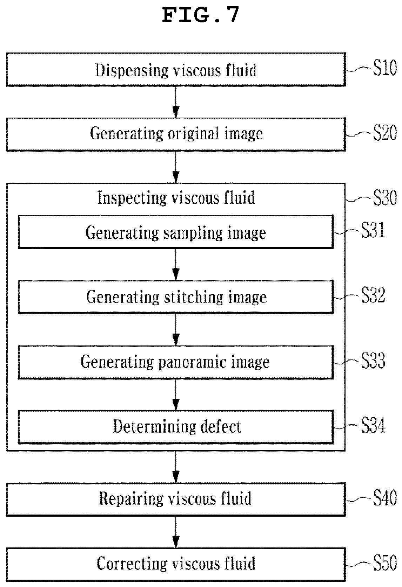

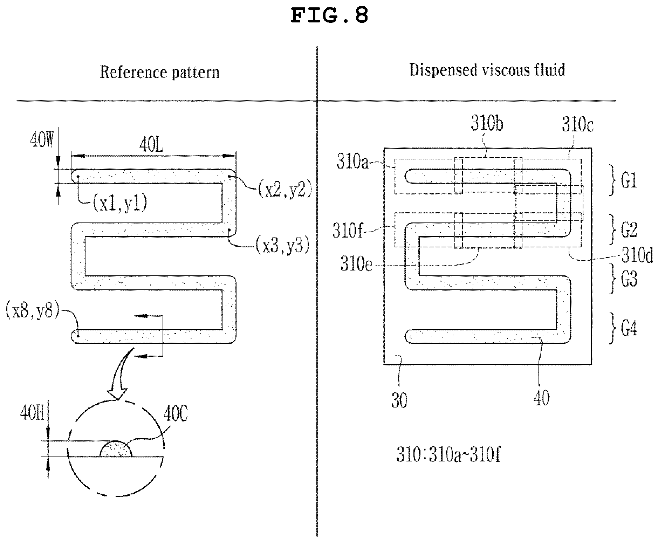

FIG. 7 is a flowchart showing a method for inspecting and repairing the dispensed viscous fluid 40 on the basis of an embodiment. FIG. 8 is a view showing the dispensed viscous fluid 40 and an imaging area on the workpiece 30 on the basis of an embodiment. An enlarged view taken along line B-B' of FIG. 8 shows a cross-sectional shape 40C of the viscous fluid 40. The following description will be made with reference to FIGS. 7 and 8.

The method for inspecting and repairing a dispensed viscous fluid on the basis of the embodiment includes: dispensing a viscous fluid 40 on the workpiece 30 by the dispenser module 100 moved by the robot module 400 at S10; generating the original images 310 by the vision module 300 photographing the dispensed viscous fluid 40 on the workpiece 30 at S20, inspecting the dispensed viscous fluid 40 to see whether the defective part 350 exists in the dispensed viscous fluid 40 by the control module 500 analyzing the original images 310 at S30; and repairing the viscous fluid 40 by the control module 500 controlling the dispenser module 100 and the robot module 400 so that a viscous fluid 40 is dispensed to a defective part 350 when the defective part 350 exists in the dispensed viscous fluid 40 at S40.

The dispensing of the viscous fluid 40 at S10 is a process in which the robot module 400 moves the dispenser module 100 according to a reference pattern and the dispenser module 100 dispenses the viscous fluid 40 on the basis of the control of the control module 500. The reference pattern may be stored in the storage 520. The reference pattern may be determined according to the design of the workpiece 30.

Referring to FIG. 8, the reference pattern may include information about the coordinates of the dispensing start point (x1, y1), dispensing midpoint (x2, y2), and dispensing end point (x8, y8) of the viscous fluid 40, a pattern shape according to the coordinates, a length 40L, width 40W, and height 40H, of the viscous fluid 40, and the cross-sectional shape 40C.

When the dispensing of the viscous fluid 40 at S10 is performed, the viscous fluid 40 is dispensed on the workpiece 30 according to the reference pattern. While the dispensing of the viscous fluid 40 at S10 is performed, the vision module 300 may simultaneously perform the generating of the original images 310 by photographing the dispensed viscous fluid 40 at S20.

The generating of the original images 310 at S20 is a process in which the vision module 300 photographs the dispensed viscous fluid 40 on the workpiece 30 and provides the generated original images 310 to the control module 500. The vision module 300 may photograph the dispensed viscous fluid 40 according to the shape of the reference pattern. The vision module 300 may photograph the dispensed viscous fluid 40 while moving along a path taken by the dispenser module 100. The generating of the original images 310 at S20 may be performed in real time while the viscous fluid 40 is dispensed. Areas corresponding to the original images 310 generated by the vision module 300 are indicated by dotted boxes in FIG. 8. The vision module 300 may generate the original images 310 by photographing the viscous fluid 40 included in each of sections G1, G2, G3, and G4. The sections, which are parts of the viscous fluid 40 corresponding to parts at which the battery cells 10 and the workpiece 30 (for example, the lower cover) are connected to each other, are areas to determine whether the defective part 350 exists.

The vision module 300 may photograph the first section G1 and may generate a first original image 310a, a second original image 310b, and a third original image 310c. According to a moving speed of the robot module 400 and a shooting interval of the vision module 300, the vision module 300 may photograph two original images 310 taken in sequence so that the original images partially overlap each other. Since the original images 310 are photographed to partially overlap, a defect that may exist at a boundary between the original images 310 may be recognized. The vision module 300 may provide the plurality of generated original images 310 to the control module 500 in order. The plurality of original images 310 may be stored in the storage 520.

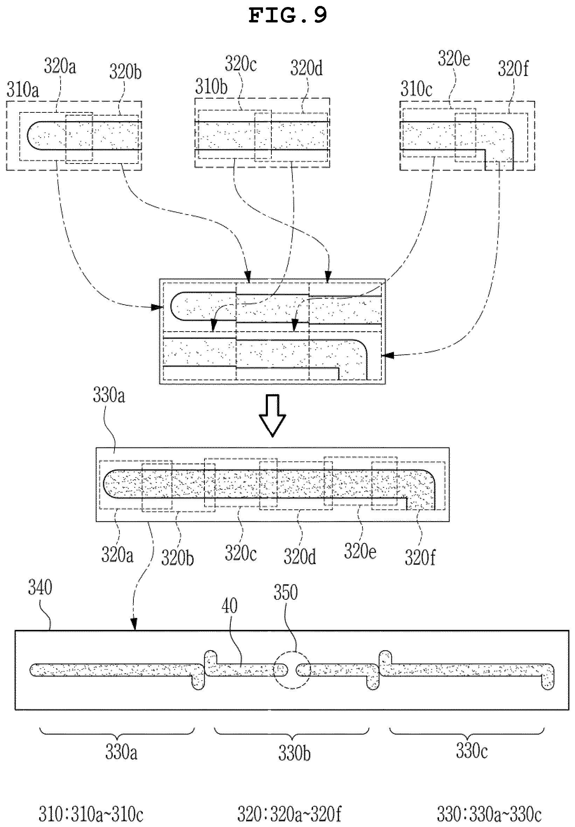

FIG. 9 is a view showing original images, sampling images 320, stitching images 330, and a panoramic image on the basis of an embodiment.

The inspecting of the viscous fluid at S30 may include generating the sampling images 320 by extracting some of the original images 310 generated by the vision module 300 by considering the moving distance of the robot module 400 and the shooting interval of the vision module at S31, generating the stitching images 330 by connecting the sampling images 320 to each other on the basis of the shape of the viscous fluid 40 shown in the sampling images 320 at S32, generating the panoramic image 340 by connecting the stitching images 330 to each other at S33, and determining whether a defect exists in the viscous fluid 40 by comparing the shape of the viscous fluid 40 shown in the panoramic image 340 with the reference pattern at S34. The inspecting of the viscous fluid may be performed in real time. Since the inspecting of the viscous fluid at S30 is performed in real time, it is possible to immediately determine whether the defective part exists in the viscous fluid 40. Accordingly, the viscous fluid 40 may be repaired and corrected before the viscous fluid 40 is completely hardened.

The generating of the sampling images 320 at S31 is the process of extracting a portion of the original images 310. A control part may extract one or more sampling images 320 from the original images 310. The sampling images 320 may be extracted so that some of the sampling images overlap with each other. For description, FIG. 9 illustrates that two sampling images 320 are extracted from one original image 310. A first sampling image 320a and a second sampling image 320b may be extracted from the first original images 310a, a third sampling images 320c and a fourth sampling image 320d may be extracted from the second original images 310b, and a fifth sampling image 320e and a sixth sampling image 320f may be extracted from the third original images 310c.

The generating of the stitching images 330 at S32 is the process of connecting the plurality of sampling images 320 to each other. Stitching is a technique that naturally connects a plurality of images to each other. The control module 500 may connect a plurality of sampling images 320 to each other by overlapping the sampling images in order on the basis of the width of the viscous fluid 40 that appears at the boundary of the sampling images 320. The pixels of a viscous fluid 40 on the left border of the second sampling image 320b can be connected to match the pixels of a viscous fluid 40 shown on the right side of the first sampling image 320a. In a process in which the robot module 400 moves the vision module 300, the viscous fluid 40 does not appear in the same position in each of all original images 310 due to the impact of vibration. Accordingly, the sampling images 320 are generated by extracting some of the original images 310, and a continuous image of the viscous fluid 40 may be obtained through stitching of connecting the sampling images on the basis of the viscous fluid 40 shown in the sampling images 320.

The generating of the panoramic image 340 at S33 is a process of connecting the stitching images 330 to generate a long image in the longitudinal direction LD of the viscous fluid 40 and performing image processing such as binarization to determine the defective part 350. The following description will be made with reference to FIGS. 8 and 9. The dispensed viscous fluid 40 may be divided into sections according to the shape of a pattern thereof. In FIG. 8, there is a first section G1 to fourth section G4 in which the viscous fluid 40 is dispensed long, and in FIG. 9, a first stitching image 330a representing the viscous fluid 40 of the first section G1, a second stitching image 330b representing the viscous fluid 40 of the second section G2, and a third stitching image 330c representing the viscous fluid 40 of the third section G3 may be connected to each other to form one panoramic image 340. The control module 500 may connect the stitching images 330 to each other and perform binarization processing. The panoramic image 340 is binarized to distinguish a color value of the viscous fluid 40 from a color value except for the viscous fluid 40. The binarized panoramic image 340 may clearly show the boundary of the viscous fluid 40 as illustrated in FIG. 9.

The determining of whether a defect exists in the viscous fluid at S34 is a process of determining whether a defect exists by comparing the viscous fluid 40 shown in the panoramic image 340 with the reference pattern. The control module 500 may determine whether a defect exists by comparing the width of the reference pattern with the width of the viscous fluid 40 of the panoramic image 340. For example, when a part of the viscous fluid 40 of the panoramic image 340 is disconnected, or a part thereof has a width smaller than a predetermined standard width compared to the reference pattern, the corresponding part may be determined to be defective.

The following description will be made by referring back to FIG. 7.

The inspecting of the viscous fluid 40 at S30, when the defective part 350 exists in the dispensed viscous fluid 40, the repairing of the viscous fluid 40 at S40 may be performed.

The repairing of the viscous fluid 40 at S40 is a process of filling a gap of the defective part 350 by locating the nozzle 210 of the dispenser module 100 at a part determined to be defective and additionally dispensing the viscous fluid 40 thereto. The repairing of the viscous fluid 40 at S40 may be performed after the dispensing of the viscous fluid 40 at S10 has been completely performed according to the reference pattern. Alternatively, when the defective part 350 is determined to exist in the inspecting of the dispensed viscous fluid 40 at S30, the dispensing of the viscous fluid 40 at S10 may stop and the repairing of the viscous fluid 40 at S40 may be performed. Alternatively, aft4er the dispensing of the viscous fluid 40 at S10 is performed according to a reference pattern corresponding to the sections G1 to G4 shown in FIG. 8, the repairing of the viscous fluid 40 at S40 may be performed. That is, the repairing of the viscous fluid 40 at S40 may be performed for each designated section of a reference pattern.

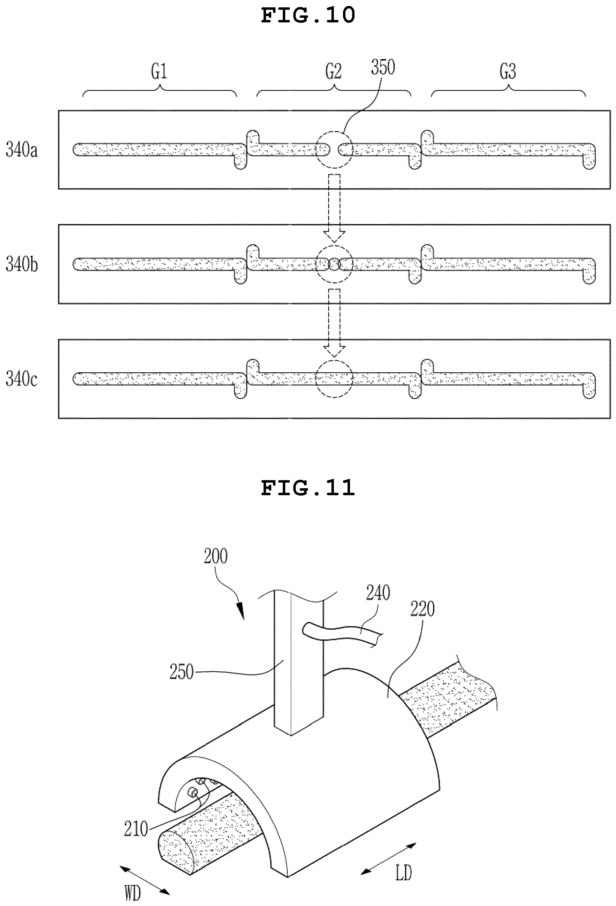

FIG. 10 is a view showing a process of repairing and correcting the defective part 350 on the basis of an embodiment. FIG. 10 shows a first panoramic image 340a showing the defective part 350 in which the viscous fluid 40 is disconnected, a second panoramic image 340b showing a state in which the viscous fluid 40 is additionally dispensed to the defective part 350 by performing the repairing of the viscous fluid 40 at S40, and a third panoramic image 340c showing a state in which the shape of a viscous fluid 40 additionally dispensed to the defective part 350 is corrected according to the reference pattern by performing the correcting of the viscous fluid 40 at S50. The repairing of the viscous fluid 40 at S40 and the correcting of the viscous fluid 40 at S50 will be described with reference to FIG. 10.

When the dispensing of the viscous fluid 40 at S10, the generating of the original images 310 at S20, and the inspecting of the viscous fluid 40 at S30 are performed, the first panoramic image 340a may be obtained. In the first panoramic image 340a, it can be seen that a defect of disconnection exists in the viscous fluid 40 corresponding to the second section.

In the repairing of the viscous fluid 40 at S40, the control module 500 controls the robot module 400 to locate the nozzle 210 of the dispenser module 100 at the defective part 350, and controls the dispenser module 100 to dispense a viscous fluid 40 to the defective part 350. When a predetermined amount of the viscous fluid 40 is dispensed to the defective part 350, the viscous fluid 40 has a shape different from the reference pattern, as shown in the second panoramic image 340b. The previously dispensed viscous fluid 40 has already begun to partially harden, and the viscous fluid 40 is viscous, and thus the viscous fluids 40 may overlap or have an unwanted shape in a portion of the defective part 350 or.

The method for inspecting and repairing a dispensed viscous fluid on the basis of the embodiment may further include correcting the viscous fluid 40 by forming the shape of the viscous fluid 40 by discharging air to the viscous fluid 40 dispensed to the defective part 350 for repairing the defective part 350 at S50.

In the correcting of the viscous fluid 40 at S50, the control module 500 may control the robot module 400 to position the correction module 200 on the defective part 350, and control the correction module 200 to additionally discharge air to the dispensed viscous fluid 40. The shape of the viscous fluid 40 may be modified by air discharged by the correction module 200 and be formed into a shape determined by the reference pattern. Referring to the third panoramic image 340c, it can be seen that the shape of the dispensed viscous fluid 40 having the defective part 350 is additionally corrected and is smoothly connected to the existing dispensed viscous fluid 40.

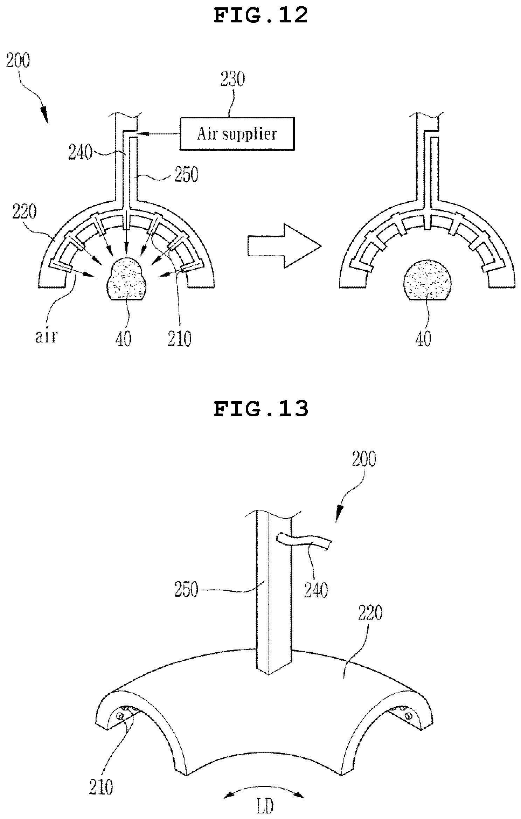

FIG. 11 is a view showing the correction module 200 based on an embodiment. FIG. 12 is a view showing a process in which the correction module based on the embodiment forms the viscous fluid.

The correction module 200 may include one nozzle or a plurality of nozzles 210 discharging air toward the viscous fluid 40, the body 220 fixing the nozzle 210 to be directed toward the viscous fluid 40, and an air supplier 230 supplying air to the nozzle 210 through an air line 240. In this case, the control module 500 may control whether the air supplier 230 outputs air and air output pressure of the air supplier 230 so that air discharged by the nozzle 210 changes the shape of the viscous fluid 40, and may control the robot module 400 to arrange the body 220 at a desired location.

The nozzle 210 may be connected to the air supplier 230 through the air line 240. The nozzle 210 may discharge air to the viscous fluid 40. The nozzle 210 may include a plurality of nozzles. The cross section of the nozzle 210 may have various shapes, such as circular, square, or narrow and long slit shape. The nozzles 210 may be arranged in directions to discharge air toward the viscous fluid 40. To correspond to the cross-sectional shape of the viscous fluid 40 (see FIG. 8), the plurality of nozzles 210 may be arranged in an arcuate shape. The body 220 may perform the function of fixing the plurality of nozzles 210. The body 220 may be formed into various shapes according to the arrangement of the nozzles 210. When the plurality of nozzles 210 are arranged in an arch shape, one side of the body 220 facing the viscous fluid 40 may be formed in an arch shape so that the body 220 fixes the plurality of nozzles 210.

As shown in FIG. 11, the body 220 may have an arcuate cross section in the width direction WD of the viscous fluid 40 and may be formed into a long straight shape in the longitudinal direction LD of the viscous fluid 40 so that the plurality of nozzles 210 faces the viscous fluid 40. When the body 220 and the nozzles 210 are formed as shown in FIG. 11, air discharged by the nozzles 210 is directed toward the center of the arch, and the cross section of the viscous fluid 40 may be formed to be close to a semicircle.

A rod 250 may be connected to the body 220. The rod 250 may be connected to the robot module 400 or the dispenser module. The rod 250 may support the body 220 and the nozzle 210. The robot module 400 may adjust the position and direction of the rod 250 to locate the nozzle 210 of the correction module 200 on the defective part 350.

The correcting of the viscous fluid 40 at S50 may include locating the correction module 200 at the defective part 350, and controlling whether the air supplier 230 outputs air and air output pressure of the air supplier 230 so that air discharged by the nozzle 210 changes the shape of the viscous fluid 40.

The air line 240 is a path through which air flows. The air line 240 may be formed inside the body 220 and the rod 250. The air line 240 may be formed outside the body 220 and the rod 250. FIG. 11 shows a structure in which the air line 240 is formed inside the body 220 and the rod 250. The air line 240 may supply air to each of the plurality of nozzles 210. Air provided through the air line 240 from the air supplier 230 is discharged through the nozzle 210 to apply pressure to the viscous fluid 40. The control module 500 may control the air supplier 230 to adjust the timing of supplying air, timing of blocking air, air pressure, and an air flow rate, etc.

FIG. 13 is a view showing a correction module 200 with a curved body 220 on the basis of an embodiment.

The body 220 may have an arcuate cross section in the width direction WD of the viscous fluid 40 and may be formed into a long and curved shape in the longitudinal direction LD of the viscous fluid 40 so that the plurality of nozzles 210 faces the viscous fluid 40. As shown in FIG. 13, the body 220 having a long and curved shape in the longitudinal direction LD of the viscous fluid 40 may be used when a defective part 350 is present in a curved portion. The degree of bending of the body 220 may be determined according to the reference pattern. In the case of the bent body 220, even if air is discharged to a previously dispensed viscous fluid 40, the shape of the previous viscous fluid 40 does not change, but only the shape of an additionally dispensed viscous fluid 40 may be changed. Accordingly, the additionally dispensed viscous fluid 40 may be corrected to match the reference pattern.

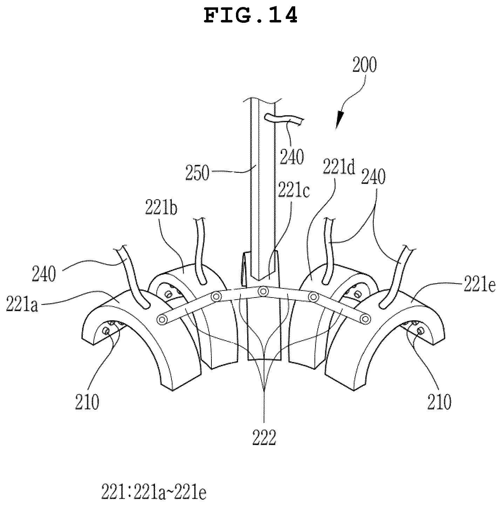

FIG. 14 is a view showing a correction module 200 with a transformable body 220 on the basis of an embodiment.

The body 220 may include the plurality of sub-bodies 221, each of which has an arcuate cross section in the width direction WD of the viscous fluid 40 so that the plurality of nozzles 210 faces the viscous fluid 40, and joints 222 which connect the plurality of sub-bodies 221 to each other so that the plurality of sub-bodies 221 can be wholly transformed into a shape bent in the longitudinal direction LD of the viscous fluid 40. The control module 500 may control the joints 222 to correspond to the straight or curved portion of the reference pattern of the viscous fluid 40 so that air discharged by the nozzle 210 forms the viscous fluid 40 into a straight or curved line corresponding to the reference pattern.

The body 220 may include the plurality of sub-bodies 221. For example, the body 220 may include a first sub-body 221a to a fifth sub-body 221f. The number of the sub-bodies 221 or a distance between the sub-bodies 221 may be determined to correspond to the design of the reference pattern.

The correcting of the viscous fluid 40 at S50 may include controlling the joints 222 to correspond to the straight or curved portion of the reference pattern of the viscous fluid 40 so that air discharged by the nozzle 210 forms the viscous fluid 40 into a straight or curved line corresponding to the reference pattern, locating the correction module 200 at the defective part 350, and controlling whether the air supplier 230 outputs air and air output pressure of the air supplier 230 so that air discharged by the nozzle 210 changes the shape of the viscous fluid 40.

The sub-bodies 221 may hold the plurality of the nozzles 210. Each of the joints 222 may connect a sub-body 221 with a sub-body 221 and may be configured to adjust an angle between the sub-bodies under the control of the control module 500. The joint 222 may include a plurality of joints. The joint 222 may connect the first sub-body 221a with a second sub-body 222b, and another joint 222 may connect the second sub-body 222b with a third sub-body 222c. The joints 222 may change angles between the sub-bodies, by having a driving part including having motors, and gears, etc.

When the plurality of sub-bodies 221 is arranged side by side, the plurality of sub-bodies 221 may be used for a defective part 350 that occurs in a straight viscous fluid 40 equal to the shape of the body 220, which is long in the longitudinal direction LD of the viscous fluid 40 as shown in FIG 11, and, which is equally. When the plurality of sub-bodies 221 is arranged to be curved in the longitudinal direction, the plurality of sub-bodies 221 may be used for the defective part 350 present in a curved part of the viscous fluid 40 as shown in FIG. 12.

The control module 500 may control the joints 222 according to the shape of a reference pattern at a point at which a defective part 350 occurs and arrange the plurality of sub-bodies 221 to correspond to the reference pattern.

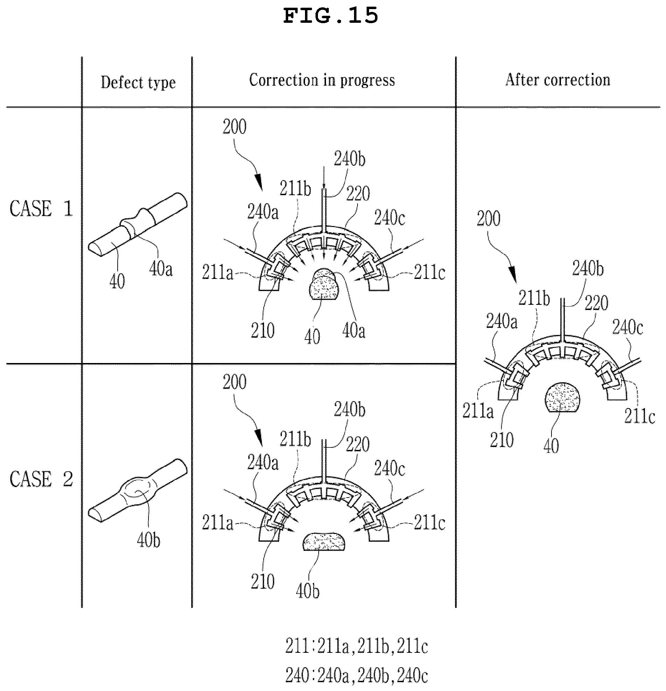

FIG. 15 is a view showing the process of correcting a viscous fluid 40 according to the type of a defect by using a correction module 200 with nozzle groups 211 on the basis of an embodiment.

The correction module 200 on the basis of the embodiment may include the nozzle groups 211. The plurality of nozzles 210 of the correction module 200 may be divided into two or more nozzle groups 211 which discharge air toward the viscous fluid 40 from various directions. The air supplier 230 may independently supply air to the air line 240 connected to each of the two or more nozzle groups 211. The control module 500 may independently control whether to output air supplied to the two or more nozzle groups 211 by the air supplier 230 and output pressure of the air according to the type of a defect of the viscous fluid 40.

The correction module 200 may include a plurality of nozzle groups 211. The nozzle groups 211 may include a plurality of nozzles 210. Each of the nozzle groups 211 may receive air through the air line 240 from the air supplier 230. The number of air lines 240 may correspond to the number of nozzle groups 211. One or more air lines 240 may be connected to each nozzle group 211, and nozzles 210 included in one nozzle group 211 may discharge air in the same manner.

For example, FIG. 15 shows the correction module 200 including three nozzle groups 211a, 211b, and 211c. A first nozzle group 211a includes two nozzles 210 in a cross section, a second nozzle group 211b includes five nozzles 210 in a cross section, and a third nozzle group 211c includes two nozzles 210 in a cross section. Two nozzles 210 of the first nozzle group 211a receive air from a first air line 240a, and whether to discharge the air and pressures at which to discharge the air may be the same between the two nozzles 210. Five nozzles 210 of the second nozzle group 211b receive air from a second air line 240b, and whether to discharge the air and pressures at which to discharge the air may be the same between the five nozzles 210. Two nozzles 210 of the third nozzle group 211c receive air from a third air line 240c, and whether to discharge the air and pressures at which to discharge the air may be the same between the two nozzles 210.

The plurality of air lines 240a, 240b, and 240c may be connected to the air supplier 230. The air supplier 230 may independently control whether to discharge air and air discharge pressure for each of the air lines 240a, 240b, and 240c connected to the plurality of nozzle groups 211a, 211b, and 211c, respectively, on the basis of the control of the control module 500.

According to the method for inspecting and repairing a dispensed viscous fluid on the basis of the embodiment, in the controlling of whether the air supplier 230 outputs air and air discharge pressure of the air supplier 230, the control module 500 may independently control whether to output air supplied to the two or more nozzle groups 211 by the air supplier 230 and output pressure of the air according to the type of a defect of the viscous fluid 40.

There may be various types of defects in the viscous fluid 40. FIG. 15 shows processes of correcting in Case 1 in which a 'break'-type defect occurred, and Case 2 in which a 'pressed'-type defect occurred.

In Case 1, the defect type of the defective part is a type in which a part of the viscous fluid 40 is broken. In the inspecting of the viscous fluid 40 at S30, the control module 500 may analyze the original images 310 to determine the type of the defective part and determine that a 'break'-type defect has occurred. When a 'break'-type defect has occurred, the control module 500 may additionally apply the viscous fluid 40 to the defective part in the repairing of the viscous fluid 40 at S40. When the viscous fluid 40 is additionally applied, the overlapping part 40a of the existing viscous fluid 40 and the newly applied viscous fluid 40 may occur. In this case, in the controlling of whether to discharge air and air discharge pressure by the air supplier 230 (see the correcting of Case 1 of FIG. 15), the control module 500 may control the air supplier 230 so that air is discharged from all of the first air line 240a, the second air line 240b, and the third air line 240c, and, as a result, air may be discharged from all of the first nozzle group 211a, the second nozzle group 211b, and the third nozzle group 211c to correct the overlapping part 40a of the viscous fluid 40. When the viscous fluid 40 is corrected, the viscous fluid 40 may have a desired shape as in 'after correction' in FIG. 15.

In Case 2, a defective type of the defective part is a type in which a part of the dispensed viscous fluid 40 has a pressed form 40b. In the inspecting of the viscous fluid 40 at S30, the control module 500 may analyze original images to determine the type of the defective part as the occurrence of a 'pressed'-type defect. When the 'pressed'-type defect occurs, the control module 500 may control the air supplier 230 so that air is discharged only from a portion of the nozzle group 211. In the controlling of whether the air supplier 230 outputs air and the air output pressure thereof (see during correction in Case 2 of FIG. 15), the control module 500 may control the air supplier 230 so that the first air line 240a and the third air line 240c discharge air, and, as a result, air may be discharged from the first nozzle group 211a and the third nozzle group 211c. The first nozzle group 211a and the third nozzle group 211c are nozzle groups 211 located on opposite sides of the pressed part of the viscous fluid 40. Accordingly, air discharged from the first nozzle group 211a and the third nozzle group 211c may apply force to each of the opposite sides of the pressed viscous fluid 40 so that the pressed viscous fluid 40 can be corrected to an unpressed state. When the viscous fluid 40 is corrected, as in 'after correction' of FIG. 15, the viscous fluid 40 can have a desired shape.

Case 1 and Case 2 illustrate some of various types of defects. In addition to the defects of Case 1 and Case 2, various types of defects may exist. The control module 500 may control air to be discharged from a nozzle group 211 located in a direction necessary to correct a defect.

Cases 1 and 2 show the correction module 200 with three nozzle groups 211. In addition to the correction module of Cases 1 and 2, a correction module 200 with various numbers and arrangements of nozzle groups 211 may be implemented. The control module 500 may control the various numbers and arrangements of nozzle groups 211 to correct a viscous fluid 40 of a defective part.

The disclosed technology has been described in detail through the specific embodiments. The embodiments are intended to specifically explain the disclosed technology, and the disclosed technology is not limited thereto.

## Claims

1. An apparatus for inspecting and repairing a dispensed viscous fluid (40), the apparatus comprising:
a dispenser module (100) dispensing a viscous fluid (40) on a workpiece (30);
a vision module (300) generating original images (310) by photographing the viscous fluid (40) dispensed on the workpiece (30);
a robot module (400) moving the dispenser module (100) and the vision module (300) through predetermined paths, respectively; and
a control module (500) determining whether a defective part (350) exists in the dispensed viscous fluid (40) by analyzing the original images (310) and controlling the dispenser module (100) and the robot module (400) to dispense a viscous fluid (40) to a defective part (350) when the defective part (350) exists,
**characterized in that** the apparatus further comprises:
a correction module (200) which is moved by the robot module (400) and forms a shape of the viscous fluid (40) by discharging air to the viscous fluid (40) dispensed to the defective part (350) for repairing the defective part (350) on a basis of control of the control module (500),
wherein the control module (500) controls the robot module (400) to position the correction module (200) on the defective part (350) and controls the correction module (200) to additionally discharge air to the dispensed viscous fluid (40) to modify the shape of the viscous fluid (40) additionally dispensed to the defective part (350).

2. The apparatus of claim 1, wherein the control module (500) generates sampling images (320) by extracting some of the original images (310) generated by being photographed in real time by the vision module (300) by considering a moving distance of the robot module (400) and a shooting interval of the vision module (300), generates stitching images (330) by connecting the sampling images (320) to each other on a basis of a shape of the viscous fluid (40) shown in each of the sampling images (320), generates a panoramic image (340) by connecting the stitching images (330) to each other, and determines in real time whether a defect exists in the viscous fluid (40) shown in the panoramic image (340).

3. The apparatus of claim 1 or 2, wherein the correction module (200) comprises:
one nozzle (210) or a plurality of nozzles (210) discharging air toward the viscous fluid (40);
a body (220) fixing the nozzle (210) to be directed toward the viscous fluid (40); and
an air supplier (230) supplying air to the nozzle (210) through an air line (240),
wherein the control module (500) controls whether the air supplier (230) outputs air and air output pressure of the air supplier (230) so that air discharged by the nozzle (210) changes a shape of the viscous fluid (40), and controls the robot module (400) to arrange the body (220) at a desired position.

4. The apparatus of claim 3, wherein the body (220) has an arcuate cross section in a width direction of the viscous fluid (40) and is formed into a long and straight shape in a longitudinal direction of the viscous fluid (40) so that the plurality of nozzles (210) faces the viscous fluid (40).

5. The apparatus of claim 3, wherein the body (220) has an arcuate cross section in a width direction of the viscous fluid (40) and is formed into a long and curved shape in a longitudinal direction of the viscous fluid (40) so that the plurality of nozzles (210) faces the viscous fluid (40).

6. The apparatus of any one of claims 3 to 5, wherein the body (220) comprises:
a plurality of sub-bodies (221), each of which has an arcuate cross section in a width direction of the viscous fluid (40) so that the plurality of nozzles (210) faces the viscous fluid (40); and
joints (222) connecting the plurality of sub-bodies (221) to each other so that the plurality of sub-bodies (221) is wholly transformed into a shape bent in a longitudinal direction of the viscous fluid (40),
wherein the control module (500) controls the joints (222) to correspond to a straight or curved portion of a reference pattern of the viscous fluid (40) so that air discharged by the nozzle (210) forms the viscous fluid (40) into a straight or curved line corresponding to the reference pattern.

7. The apparatus any one of claims 3 to 6, wherein the plurality of nozzles (210) is divided into two or more nozzle groups (211) which discharge air toward the viscous fluid (40) from various directions,
the air supplier (230) independently supplies air to the air line (240) connected to each of the two or more nozzle groups (211), and
the control module (500) independently controls whether to output air supplied to the two or more nozzle groups (211) by the air supplier (230) and output pressure of the air according to a type of a defect of the viscous fluid (40).

8. A method for inspecting and repairing a dispensed viscous fluid (40), the method comprising:
dispensing a viscous fluid (40) on a workpiece (30) by a dispenser module (100) moved by a robot module (400);
generating original images (310) by a vision module (300) photographing the dispensed viscous fluid (40) on the workpiece (30);
inspecting the dispensed viscous fluid (40) to see whether a defective part (350) exists in the dispensed viscous fluid (40) by a control module (500) analyzing the original images (310); and
repairing the viscous fluid (40) by the control module (500) controlling the dispenser module (100) and the robot module (400) to dispense a viscous fluid (40) to a defective part (350) when the defective part (350) exists in the dispensed viscous fluid (40),
**characterized in that** the method further comprises
correcting the viscous fluid (40) by forming a shape of the viscous fluid (40) by discharging air to the viscous fluid (40) dispensed to the defective part (350) by using a correction module (200) for repairing the defective part (350),
wherein the control module (500) controls the robot module (400) to position the correction module (200) on the defective part (350) and controls the correction module (200) to additionally discharge air to the dispensed viscous fluid (40) to modify the shape of the viscous fluid (40) additionally dispensed to the defective part (350).

9. The method of claim 8, wherein the inspecting comprises:
generating sampling images (320) by extracting some of the original images (310) generated by the vision module (300) by considering a moving distance of the robot module (400) and a shooting interval of the vision module (300);
generating stitching images (330) by connecting the sampling images (320) to each other on a basis of a shape of the viscous fluid (40) shown in the sampling images (320);
generating a panoramic image (340) by connecting the stitching images (330) to each other; and
determining whether a defect exists in the viscous fluid (40) by comparing a shape of the viscous fluid (40) shown in the panoramic image (340) with a reference pattern,
wherein the inspecting is performed in real time.

10. The method of claim 8 or 9, wherein the correction module (200) comprises:
one nozzle (210) or a plurality of nozzles (210) discharging air toward the viscous fluid (40);
a body (220) fixing the nozzle (210) to be directed toward the viscous fluid (40); and
an air supplier (230) supplying air to the nozzle (210) through an air line (240),
wherein the correcting of the viscous fluid (40) comprises:
locating the correction module (200) at the defective part (350); and
controlling whether the air supplier (230) outputs air and air output pressure of the air supplier (230) so that air discharged by the nozzle (210) changes the shape of the viscous fluid (40).

11. The method of claim 10, wherein the body (220) has an arcuate cross section in a width direction of the viscous fluid (40) and is formed into a long and straight shape in a longitudinal direction of the viscous fluid (40) so that the plurality of nozzles (210) faces the viscous fluid (40), or wherein the body (220) has an arcuate cross section in a width direction of the viscous fluid (40) and is formed into a long and curved shape in a longitudinal direction of the viscous fluid (40) so that the plurality of nozzles (210) faces the viscous fluid (40).

12. The method of claim 10 or 11, wherein the body (220) comprises:
a plurality of sub-bodies (221), each of which has an arcuate cross section in a width direction of the viscous fluid (40) so that the plurality of nozzles (210) faces the viscous fluid (40); and
joints (222) connecting the plurality of sub-bodies (221) to each other so that the plurality of sub-bodies (221) is wholly transformed into a shape bent in a longitudinal direction of the viscous fluid (40),
wherein the correcting of the viscous fluid (40) further comprises:
controlling the joints (222) to correspond to a straight or curved portion of a reference pattern of the viscous fluid (40) so that air discharged by the nozzle (210) forms the viscous fluid (40) into a straight or curved line corresponding to the reference pattern.

13. The method of any one of claim 10 to 12, wherein the plurality of nozzles (210) is divided into two or more nozzle groups (211) which discharge air toward the viscous fluid (40) from various directions,
the air supplier (230) independently supplies air to the air line (240) connected to each of the two or more nozzle groups (211), and
in the controlling of whether the air supplier (230) outputs air and air output pressure of the air supplier (230), the control module (500) independently controls whether to output air supplied to the two or more nozzle groups (211) by the air supplier (230) and output pressure of the air according to a type of a defect of the viscous fluid (40).

## Patentansprüche

1. Vorrichtung zum Prüfen und Reparieren eines abgegebenen viskosen Fluids (40), wobei die Vorrichtung aufweist:
ein Abgabemodul (100), das ein viskoses Fluid (40) auf ein Werkstück (30) abgibt;
ein Sichtmodul (300), das Originalbilder (310) durch Fotografieren des auf das Werkstück (30) abgegebenen viskosen Fluids (40) erzeugt;
ein Robotermodul (400), das das Abgabemodul (100) und das Sichtmodul (300) jeweils durch vorbestimmte Pfade bewegt; und
ein Steuermodul (500), das durch Analysieren der Originalbilder (310) bestimmt, ob ein defekter Teil (350) in dem abgegebenen viskosen Fluid (40) existiert, und das Abgabemodul (100) und das Robotermodul (400) steuert, um ein viskoses Fluid (40) an einen defekten Teil (350) abzugeben, wenn der defekte Teil (350) existiert,
**dadurch gekennzeichnet, dass** die Vorrichtung ferner aufweist:
ein Korrekturmodul (200), das auf einer Basis der Steuerung des Steuermoduls (500) durch das Robotermodul (400) bewegt wird und eine Form des viskosen Fluids (40) durch Abgeben von Luft zu dem an den defekten Teil (350) abgegebenen viskosen Fluid (40) zum Reparieren des defekten Teils (350) formt,
wobei das Steuermodul (500) das Robotermodul (400) steuert, das Korrekturmodul (200) auf dem defekten Teil (350) zu positionieren, und das Korrekturmodul (200) steuert, zusätzlich Luft zu dem abgegebenen viskosen Fluid (40) abzublasen, um die Form des zusätzlich an den defekten Teil (350) abgegebenen viskosen Fluids (40) zu modifizieren.

2. Vorrichtung nach Anspruch 1, wobei das Steuermodul (500) durch Extrahieren von einigen von den Originalbildern (310), die erzeugt werden, indem sie durch das Sichtmodul (300) unter Berücksichtigung einer Bewegungsdistanz des Robotermoduls (400) und eines Aufnahmeintervalls des Sichtmoduls (300) in Echtzeit fotografiert werden, Abtastbilder (320) erzeugt, Stitching-Bilder (330) durch Verbinden der Abtastbilder (320) miteinander auf einer Basis einer Form des in jedem der Abtastbilder (320) gezeigten viskosen Fluids (40) erzeugt, ein Panoramabild (340) durch Verbinden der Stitching-Bilder (330) miteinander erzeugt und in Echtzeit bestimmt, ob ein Defekt in dem in dem Panoramabild (340) gezeigten viskosen Fluid (40) existiert.

3. Vorrichtung nach Anspruch 1 oder 2, wobei das Korrekturmodul (200) aufweist:
eine Düse (210) oder eine Vielzahl von Düsen (210), die Luft zu dem viskosen Fluid (40) hin abgibt;
einen Körper (220), der die Düse (210) feststellt, um zu dem viskosen Fluid (40) hin gerichtet zu sein; und
eine Luftzuführung (230), die durch eine Luftleitung (240) Luft zu der Düse (210) zuführt,
wobei das Steuermodul (500) steuert, ob die Luftzuführung (230) Luft ausgibt, und einen Luftausgabedruck der Luftzuführung (230) steuert, so dass durch die Düse (210) abgegebene Luft eine Form des viskosen Fluids (40) verändert, und das Robotermodul (400) steuert, den Körper (220) an einer gewünschten Position anzuordnen.

4. Vorrichtung nach Anspruch 3, wobei der Körper (220) einen in einer Breitenrichtung des viskosen Fluids (40) bogenförmigen Querschnitt aufweist und in einer Längsrichtung des viskosen Fluids (40) in einer langen und geraden Form ausgebildet ist, so dass die Vielzahl von Düsen (210) dem viskosen Fluid (40) zugewandt ist.

5. Vorrichtung nach Anspruch 3, wobei der Körper (220) einen in einer Breitenrichtung des viskosen Fluids (40) bogenförmigen Querschnitt aufweist und in einer Längsrichtung des viskosen Fluids (40) in einer langen und gekrümmten Form ausgebildet ist, so dass die Vielzahl von Düsen (210) dem viskosen Fluid (40) zugewandt ist.

6. Vorrichtung nach einem der Ansprüche 3 bis 5, wobei der Körper (220) aufweist:
eine Vielzahl von Sub-Körpern (221), von denen jeder einen in einer Breitenrichtung des viskosen Fluids (40) bogenförmigen Querschnitt hat, so dass die Vielzahl von Düsen (210) dem viskosen Fluid (40) zugewandt ist; und
Verbindungen (222), die die Vielzahl von Sub-Körpern (221) miteinander verbinden, so dass die Vielzahl von Sub-Körpern (221) vollständig in eine in einer Längsrichtung des viskosen Fluids (40) gebogene Form umgewandelt wird,
wobei das Steuermodul (500) die Verbindungen (222) steuert, um einem geraden oder gekrümmten Abschnitt eines Referenzmusters des viskosen Fluids (40) zu entsprechen, so dass durch die Düse (210) abgegebene Luft das viskose Fluid (40) entsprechend dem Referenzmuster in eine gerade oder gekrümmte Linie formt.

7. Vorrichtung nach einem der Ansprüche 3 bis 6, wobei die Vielzahl von Düsen (210) in zwei oder mehr Düsengruppen (211), die Luft aus verschiedenen Richtungen zu dem viskosen Fluid (40) hin abgeben, unterteilt ist,
die Luftzuführung (230) unabhängig Luft zu der mit jeder der zwei oder mehr Düsengruppen (211) verbundenen Luftleitung (240) zuführt, und
das Steuermodul (500) unabhängig steuert, ob durch die Luftzuführung (230) den zwei oder mehr Düsengruppen (211) zugeführte Luft ausgegeben werden soll, und einen Druck der Luft entsprechend einer Art eines Defekts des viskosen Fluids (40) ausgibt.

8. Verfahren zum Prüfen und Reparieren eines abgegebenen viskosen Fluids (40), wobei das Verfahren aufweist:
Abgeben eines viskosen Fluids (40) auf ein Werkstück (30) durch ein durch ein Robotermodul (400) bewegtes Abgabemodul (100);
Erzeugen von Originalbildern (310) durch ein Sichtmodul (300), das das abgegebene viskose Fluid (40) auf dem Werkstück (30) fotografiert;
Prüfen des abgegebenen viskosen Fluids (40), um durch ein Steuermodul (500), das die Originalbilder (310) analysiert, zu sehen, ob ein defekter Teil (350) in dem abgegebenen viskosen Fluid (40) existiert; und
Reparieren des viskosen Fluids (40) durch das Steuermodul (500), das das Abgabemodul (100) und das Robotermodul (400) steuert, um ein viskoses Fluid (40) an einen defekten Teil (350) abzugeben, wenn der defekte Teil (350) in dem abgegebenen viskosen Fluid (40) existiert,
**dadurch gekennzeichnet, dass** das Verfahren ferner aufweist:
Korrigieren des viskosen Fluids (40) durch Formen einer Form des viskosen Fluids (40) durch Abgeben von Luft zu dem an das defekte Teil (350) abgegebenen viskosen Fluid (40) zum Reparieren des defekten Teils (350) unter Verwendung eines Korrekturmoduls (200),
wobei das Steuermodul (500) das Robotermodul (400) steuert, das Korrekturmodul (200) auf dem defekten Teil (350) zu positionieren, und das Korrekturmodul (200) steuert, zusätzlich Luft zu dem abgegebenen viskosen Fluid (40) abzublasen, um die Form des zusätzlich an den defekten Teil (350) abgegebenen viskosen Fluids (40) zu modifizieren.

9. Verfahren nach Anspruch 8, wobei das Prüfen aufweist:
Erzeugen von Abtastbildern (320) durch Extrahieren von einigen von den Originalbildern (310), die durch das Sichtmodul (300) unter Berücksichtigung einer Bewegungsdistanz des Robotermoduls (400) und eines Aufnahmeintervalls des Sichtmoduls (300) erzeugt werden;
Erzeugen von Stitching-Bildern (330) durch Verbinden der Abtastbilder (320) miteinander auf einer Basis einer Form des in den Abtastbildern (320) gezeigten viskosen Fluids (40);
Erzeugen eines Panoramabilds (340) durch Verbinden der Stitching-Bilder (330) miteinander; und
Bestimmen, ob ein Defekt in dem viskosen Fluid (40) existiert, durch Vergleichen einer Form des in dem Panoramabild (340) gezeigten viskosen Fluids (40) mit einem Referenzmuster,
wobei das Prüfen in Echtzeit durchgeführt wird.

10. Verfahren nach Anspruch 8 oder 9, wobei das Korrekturmodul (200) aufweist:
eine Düse (210) oder eine Vielzahl von Düsen (210), die Luft zu dem viskosen Fluid (40) hin abgibt;
einen Körper (220), der die Düse (210) feststellt, um zu dem viskosen Fluid (40) hin gerichtet zu sein; und
eine Luftzuführung (230), die durch eine Luftleitung (240) Luft zu der Düse (210) zuführt,
wobei das Korrigieren des viskosen Fluids (40) aufweist:
Anordnen des Korrekturmoduls (200) bei dem defekten Teil (350); und
Steuern, ob die Luftzuführung (230) Luft ausgibt, und eines Luftausgabedruck der Luftzuführung (230), so dass durch die Düse (210) abgegebene Luft die Form des viskosen Fluids (40) verändert.

11. Verfahren nach Anspruch 10, wobei der Körper (220) einen in einer Breitenrichtung des viskosen Fluids (40) bogenförmigen Querschnitt hat und in einer Längsrichtung des viskosen Fluids (40) in einer langen und geraden Form ausgebildet ist, so dass die Vielzahl von Düsen (210) dem viskosen Fluid (40) zugewandt ist, oder wobei der Körper (220) einen in einer Breitenrichtung des viskosen Fluids (40) bogenförmigen Querschnitt hat und in einer Längsrichtung des viskosen Fluids (40) in einer langen und gekrümmten Form ausgebildet ist, so dass die Vielzahl von Düsen (210) dem viskosen Fluid (40) zugewandt ist.

12. Verfahren nach Anspruch 10 oder 11, wobei der Körper (220) aufweist:
eine Vielzahl von Sub-Körpern (221), von denen jeder einen in einer Breitenrichtung des viskosen Fluids (40) bogenförmigen Querschnitt hat, so dass die Vielzahl von Düsen (210) dem viskosen Fluid (40) zugewandt ist; und
Verbindungen (222), die die Vielzahl von Sub-Körpern (221) miteinander verbinden, so dass die Vielzahl von Sub-Körpern (221) vollständig in eine in einer Längsrichtung des viskosen Fluids (40) gebogene Form umgewandelt wird,
wobei das Korrigieren des viskosen Fluids (40) ferner aufweist:
Steuern der Verbindungen (222), um einem geraden oder gekrümmten Abschnitt eines Referenzmusters des viskosen Fluids (40) zu entsprechen, so dass durch die Düse (210) abgegebene Luft das viskose Fluid (40) entsprechend dem Referenzmuster in eine gerade oder gekrümmte Linie formt.

13. Verfahren nach einem der Ansprüche 10 bis 12, wobei die Vielzahl von Düsen (210) in zwei oder mehr Düsengruppen (211), die Luft aus verschiedenen Richtungen zu dem viskosen Fluid (40) hin abgeben, unterteilt ist,
die Luftzuführung (230) unabhängig Luft zu der mit jeder der zwei oder mehr Düsengruppen (211) verbundenen Luftleitung (240) zuführt, und
bei dem Steuern, ob die Luftzuführung (230) Luft ausgibt, und eines Luftausgabedrucks der Luftzuführung (230) das Steuermodul (500) unabhängig steuert, ob durch die Luftzuführung (230) den zwei oder mehr Düsengruppen (211) zugeführte Luft ausgegeben werden soll, und einen Druck der Luft gemäß einer Art eines Defekts des viskosen Fluids (40) ausgibt.

## Revendications

1. Appareil pour inspecter et réparer un fluide visqueux distribué (40), l'appareil comprenant:
un module de distribution (100) distribuant un fluide visqueux (40) sur une pièce à travailler (30);
un module de vision (300) générant des images originales (310) en photographiant le fluide visqueux (40) distribué sur la pièce à travailler (30);
un module de robot (400) déplaçant le module de distribution (100) et le module de vision (300) à travers des trajets prédéterminés, respectivement; et
un module de contrôle (500) déterminant si une partie défectueuse (350) existe dans le fluide visqueux distribué (40) en analysant les images originales (310) et en contrôlant le module de distribution (100) et le module de robot (400) pour distribuer un fluide visqueux (40) à une partie défectueuse (350) lorsque la partie défectueuse (350) existe,
**caractérisé en ce que** l'appareil comprend en outre:
un module de correction (200) qui est déplacé par le module de robot (400) et forme une forme du fluide visqueux (40) en évacuant de l'air vers le fluide visqueux (40) distribué à la partie défectueuse (350) pour réparer la partie défectueuse (350) sur une base de contrôle du module de contrôle (500),
dans lequel le module de contrôle (500) contrôle le module de robot (400) pour positionner le module de correction (200) sur la partie défectueuse (350) et contrôle le module de correction (200) pour évacuer en outre de l'air vers le fluide visqueux distribué (40) pour modifier la forme du fluide visqueux (40) distribué en outre à la partie défectueuse (350).

2. Appareil selon la revendication 1, dans lequel le module de contrôle (500) génère des images d'échantillonnage (320) en extrayant certaines des images originales (310) générées en étant photographiées en temps réel par le module de vision (300) en considérant une distance de déplacement du module de robot (400) et un intervalle de prise de vue du module de vision (300), génère des images d'assemblage (330) en reliant les images d'échantillonnage (320) les unes aux autres sur une base d'une forme du fluide visqueux (40) montrée dans chacune des images d'échantillonnage (320), génère une image panoramique (340) en reliant les images d'assemblage (330) les unes aux autres, et détermine en temps réel si un défaut existe dans le fluide visqueux (40) montré dans l'image panoramique (340).

3. Appareil selon la revendication 1 ou 2, dans lequel le module de correction (200) comprend:
une buse (210) ou une pluralité de buses (210) évacuant de l'air vers le fluide visqueux (40);
un corps (220) fixant la buse (210) pour qu'elle soit dirigée vers le fluide visqueux (40); et
un dispositif d'alimentation en air (230) fournissant d'air à la buse (210) par une conduite d'air (240),
dans lequel le module de contrôle (500) contrôle si le dispositif d'alimentation en air (230) délivre d'air et pression de sortie d'air du dispositif d'alimentation en air (230) de sorte qu'air évacué par la buse (210) change une forme du fluide visqueux (40), et contrôle le module de robot (400) pour agencer le corps (220) à une position souhaitée.

4. Appareil selon la revendication 3, dans lequel le corps (220) a une section transversale arquée dans une direction de largeur du fluide visqueux (40) et est formé en une forme longue et droite dans une direction longitudinale du fluide visqueux (40) de sorte que la pluralité de buses (210) fait face au fluide visqueux (40).

5. Appareil selon la revendication 3, dans lequel le corps (220) a une section transversale arquée dans une direction de largeur du fluide visqueux (40) et est formé en une forme longue et d'une courbe dans une direction longitudinale du fluide visqueux (40) de sorte que la pluralité de buses (210) fait face au fluide visqueux (40).

6. Appareil selon l'une quelconque des revendications 3 à 5, dans lequel le corps (220) comprend:
une pluralité de sous-corps (221), dont chacun a une section transversale arquée dans une direction de largeur du fluide visqueux (40) de sorte que la pluralité de buses (210) fait face au fluide visqueux (40); et
des joints (222) reliant la pluralité de sous-corps (221) les uns aux autres de sorte que la pluralité de sous-corps (221) est entièrement transformée en une forme courbée dans une direction longitudinale du fluide visqueux (40),
dans lequel le module de contrôle (500) contrôle les joints (222) pour correspondre à une partie droite ou d'une forme d'une courbe d'un motif de référence du fluide visqueux (40) de sorte qu'air évacué par la buse (210) forme le fluide visqueux (40) en une ligne droite ou d'une forme d'une courbe correspondant au motif de référence.

7. Appareil selon l'une quelconque des revendications 3 à 6, dans lequel la pluralité de buses (210) est divisée en deux ou plus de deux groupes de buses (211) qui évacuent d'air vers le fluide visqueux (40) depuis diverses directions,
le dispositif d'alimentation en air (230) fournit indépendamment d'air à la conduite d'air (240) reliée à chacun des deux ou plus de deux groupes de buses (211), et
le module de contrôle (500) contrôle indépendamment s'il faut délivrer d'air fourni aux deux ou plus de deux groupes de buses (211) par le dispositif d'alimentation en air (230) et délivrer pression de l'air selon un type d'un défaut du fluide visqueux (40).

8. Procédé pour inspecter et réparer un fluide visqueux distribué (40), le procédé comprenant:
la distribution d'un fluide visqueux (40) sur une pièce à travailler (30) par un module de distribution (100) déplacé par un module de robot (400);
la génération d'images originales (310) par un module de vision (300) photographiant le fluide visqueux distribué (40) sur la pièce à travailler (30);
l'inspection du fluide visqueux distribué (40) pour voir si une partie défectueuse (350) existe dans le fluide visqueux distribué (40) par un module de contrôle (500) analysant les images originales (310); et
la réparation du fluide visqueux (40) par le module de contrôle (500) contrôlant le module de distribution (100) et le module de robot (400) pour distribuer un fluide visqueux (40) à une partie défectueuse (350) lorsque la partie défectueuse (350) existe dans le fluide visqueux distribué (40),
**caractérisé en ce que** le procédé comprend en outre
correction du fluide visqueux (40) en formant une forme du fluide visqueux (40) en évacuant d'air vers le fluide visqueux (40) distribué à la partie défectueuse (350) en utilisant un module de correction (200) pour réparer la partie défectueuse (350),
dans lequel le module de contrôle (500) contrôle le module de robot (400) pour positionner le module de correction (200) sur la partie défectueuse (350) et contrôle le module de correction (200) pour évacuer en outre d'air vers le fluide visqueux distribué (40) pour modifier la forme du fluide visqueux (40) distribué en outre à la partie défectueuse (350).

9. Procédé selon la revendication 8, dans lequel l'inspection comprend:
génération d'images d'échantillonnage (320) en extrayant certaines des images originales (310) générées par le module de vision (300) en considérant une distance de déplacement du module de robot (400) et un intervalle de prise de vue du module de vision (300);
génération d'images d'assemblage (330) en reliant les images d'échantillonnage (320) les unes aux autres sur une base d'une forme du fluide visqueux (40) montrée dans les images d'échantillonnage (320);
génération d'une image panoramique (340) en reliant les images d'assemblage (330) les unes aux autres; et
détermination si un défaut existe dans le fluide visqueux (40) en comparant une forme du fluide visqueux (40) montrée dans l'image panoramique (340) avec un motif de référence,
dans lequel l'inspection est effectuée en temps réel.

10. Procédé selon la revendication 8 ou 9, dans lequel le module de correction (200) comprend:
une buse (210) ou une pluralité de buses (210) évacuant d'air vers le fluide visqueux (40);
un corps (220) fixant la buse (210) pour qu'elle soit dirigée vers le fluide visqueux (40); et
un dispositif d'alimentation en air (230) fournissant d'air à la buse (210) par une conduite d'air (240),
dans lequel la correction du fluide visqueux (40) comprend :
le positionnement du module de correction (200) au niveau de la partie défectueuse (350); et
contrôle si le dispositif d'alimentation en air (230) délivre d'air et pression de sortie d'air du dispositif d'alimentation en air (230) de sorte qu'air évacué par la buse (210) change la forme du fluide visqueux (40).

11. Procédé selon la revendication 10, dans lequel le corps (220) a une section transversale arquée dans une direction de largeur du fluide visqueux (40) et est formé en une forme longue et droite dans une direction longitudinale du fluide visqueux (40) de sorte que la pluralité de buses (210) fait face au fluide visqueux (40), ou dans lequel le corps (220) a une section transversale arquée dans une direction de largeur du fluide visqueux (40) et est formé en une forme longue et d'une courbe dans une direction longitudinale du fluide visqueux (40) de sorte que la pluralité de buses (210) fait face au fluide visqueux (40).

12. Procédé selon la revendication 10 ou 11, dans lequel le corps (220) comprend:
une pluralité de sous-corps (221), dont chacun a une section transversale arquée dans une direction de largeur du fluide visqueux (40) de sorte que la pluralité de buses (210) fait face au fluide visqueux (40); et
joints (222) reliant la pluralité de sous-corps (221) les uns aux autres de sorte que la pluralité de sous-corps (221) est entièrement transformée en une forme courbée dans une direction longitudinale du fluide visqueux (40),
dans lequel la correction du fluide visqueux (40) comprend en outre:
contrôle des joints (222) pour correspondre à une partie droite ou d'une forme d'une courbe d'un motif de référence du fluide visqueux (40) de sorte qu'air évacué par la buse (210) forme le fluide visqueux (40) en une ligne droite ou d'une forme d'une courbe correspondant au motif de référence.

13. Procédé selon l'une quelconque des revendications 10 à 12, dans lequel la pluralité de buses (210) est divisée en deux ou plus de deux groupes de buses (211) qui évacuent d'air vers le fluide visqueux (40) de diverses directions,
le dispositif d'alimentation en air (230) fournit indépendamment d'air à la conduite d'air (240) reliée à chacun des deux ou plus de deux groupes de buses (211), et
dans la contrôle si le dispositif d'alimentation en air (230) délivre d'air et pression de sortie d'air du dispositif d'alimentation en air (230), le module de contrôle (500) contrôle indépendamment s'il faut délivrer d'air fourni aux deux ou plus de deux groupes de buses (211) par le dispositif d'alimentation en air (230) et délivrer pression de l'air selon un type d'un défaut du fluide visqueux (40).
